# EUROPEAN PATENT APPLICATION

(11) **EP 1 275 552 A2**
(43) Date of publication of application: **15.01.2003**
(21) Application number: 02014766.6
(22) Date of filing: 04.07.2002
(51) Int. Cl.: B60K 41/16, B62D 49/00, F16H 61/38, B60K 17/10, F16H 39/00

(54) **Hydrostatic transmission control system and method for a tractor or utility vehicle**

(30) Priority: 13.07.2001 US 905260
(71) Applicant: DEERE & COMPANY, Moline, Illinois 61265-8098 (US)
(72) Inventor: Evans, Mark D., Athens, GA 30605 (US); Burgart, Joseph G., Martinez, GA 30907 (US)
(74) Representative: Magin, Ludwig Bernhard

(57) **Abstract**

A control system (16) for a utility vehicle transmission provides for operator selection of vehicle "aggressiveness," or rates of acceleration in response to operator command. The aggressiveness of a vehicle's performance can be controlled by modulating control signals to proportional control valves, which determine the transmission acceleration, according to two or more electrical ramp-up (or ramp-down) profiles, in response to an operator's acceleration command (or deceleration command). The transmission control system (16) includes a controller (52), directional switches and electro-hydraulic valves (106, 108) which control hydraulic pressure in the servo control system of a hydrostatic transmission (26). The operator is provided with a two-position set switch (56). With the set switch (56) in the less aggressive position, in response to an operator's command, the software in the controller (52) provides a relatively slow current ramp to energize the control valves (106, 108). With the switch (56) in the more aggressive position, the current ramps and resultant pressure ramps are faster, thus causing more aggressive transmission operation for the hydrostatic transmission (26).

## Description

The invention relates to utility vehicles for industrial and agricultural use, such as utility tractors. Particularly, the invention relates to transmission control systems for such vehicles. In addition the invention relates to a method for controlling the acceleration aggressiveness of a transmission.

Typical utility vehicles, such as compact tractors, utilize an engine operating substantially at a pre-selected speed that drives a transmission system or drive train that delivers power to one or more driven wheels. The transmission system includes a speed controllable transmission component, a gear selection component, and a differential component. The speed controllable transmission component can be, for example, a hydrostatic transmission, or a transmission that uses electro-hydraulically controlled forward and reverse clutch packs to initially accelerate the vehicle and to change vehicle direction (hereinafter referred to as a "reverser transmission"), such as a POWRREVERSER transmission incorporated in JOHN DEERE Series 4000 tractors.

The present inventors have recognized that the desired "aggressiveness" of a vehicle's performance, or rates of acceleration and deceleration in response to operator commands, depends on operator experience, the operating conditions of the vehicle and the work being performed with the vehicle. For example, experienced operators performing material handling work tend to prefer a vehicle that accelerates and decelerates aggressively, and allows quick changes in direction. An operator that is using a vehicle for turf care work would prefer less aggressive accelerations and decelerations to prevent damage to the grass caused by slipping of the vehicle wheels.

For hydrostatic transmissions and reverser transmissions, pre-selecting the vehicle performance is commonly done by sizing orifices to control the rate of fluid flow to the servo control system of the hydrostatic transmission or control the rate of fluid flow to clutch packs in the reverser transmission. With electronically controlled systems, the aggressiveness is commonly controlled by pre-selecting the rate of increase of the electrical control current to electro-hydraulic pressure reducing valves that control swashplate servo systems or clutch pack hydraulic pressures.

However, compact utility tractors are commonly used for both material handling and turf care as well as many other operations. The object to be met with the invention is to provide a utility tractor that would allow the driver to choose the aggressiveness of the tractor's performance according to the work being done. Such a selectable aggressiveness would lead to improved tractor productivity.

The present invention provides for operator selection of vehicle "aggressiveness," or rates of acceleration in response to operator command. The aggressiveness of a vehicle's performance can be controlled by modulating control signals to control valves, control valves which determine the acceleration of the vehicle transmission, according to two or more electrical ramp-up (or ramp-down) profiles, in response to an operator's acceleration command (or deceleration command).

According to the preferred embodiment of the present invention, a vehicle transmission control system includes a controller, operator controlled potentiometers and electro-hydraulic control valves which control hydraulic pressure in the servo control system of the hydrostatic transmission.

The operator is provided with a two-position set switch. With the set switch in the less aggressive position, in response to an operator's command, the software in the controller provides a a relatively slow current ramp to energize the electro-hydraulic control valves that control the actuation of the servo system of a hydrostatic transmission. By ramping up the hydraulic pressure slowly, in response to the slow current ramps, acceleration is non-aggressive. Decelerations are also performed at a relatively non-aggressive rate.

The selective aggressiveness function is operable for both forward and reverse operation.

With the switch in the more aggressive position, the current ramps and resultant pressure ramps are faster, thus causing more aggressive transmission operation for the hydrostatic transmission. Decelerations for the hydrostatic transmission are also more aggressive.

The two-position set switch could be replaced with a potentiometer, thus permitting an infinitely variable range in transmission aggressiveness control.

By providing the tractor operator with selectable transmission aggressiveness, the operator can choose the acceleration/deceleration rates according to the operator's comfort or skill level and/or to the task being performed. The vehicle performance, controllability and productivity will be improved.

Numerous other advantages and features of the present invention will become readily apparent from the following detailed description of the invention and the embodiments thereof, from the claims and from the accompanying drawings.

### Brief Description Of The Drawings

- Figure 1: is a block diagram of the control system of the present invention applied to a hydrostatic transmission system;
- Figure 2: is a schematic sectional view of the servo control system used in a hydrostatic transmission of Figure 1;
- Figure 3: is an exploded, fragmentary perspective view of the servo control system of Figure 2;
- Figure 3A: is a schematic sectional view of a control valve of the system of Figure 3;
- Figure 4: is a schematic sectional view of a hydrostatic transmission;
- Figure 5: is a diagram demonstrating the two aggressiveness settings and the time response of hydrostatic transmission servo system hydraulic pressure as a percentage of the total drive command hydraulic pressure, for accelerations; and
- Figure 6: is a diagram demonstrating the two aggressiveness settings and the time response of hydrostatic transmission servo system hydraulic pressure as a percentage of the total drive command hydraulic pressure, for decelerations.

While this invention is susceptible of embodiment in many different forms, there are shown in the drawings, and will be described herein in detail, specific embodiments thereof with the understanding that the present disclosure is to be considered as an exemplification of the principles of the invention and is not intended to limit the invention to the specific embodiments illustrated.

### Transmission Control Of A Hydrostatic Transmission

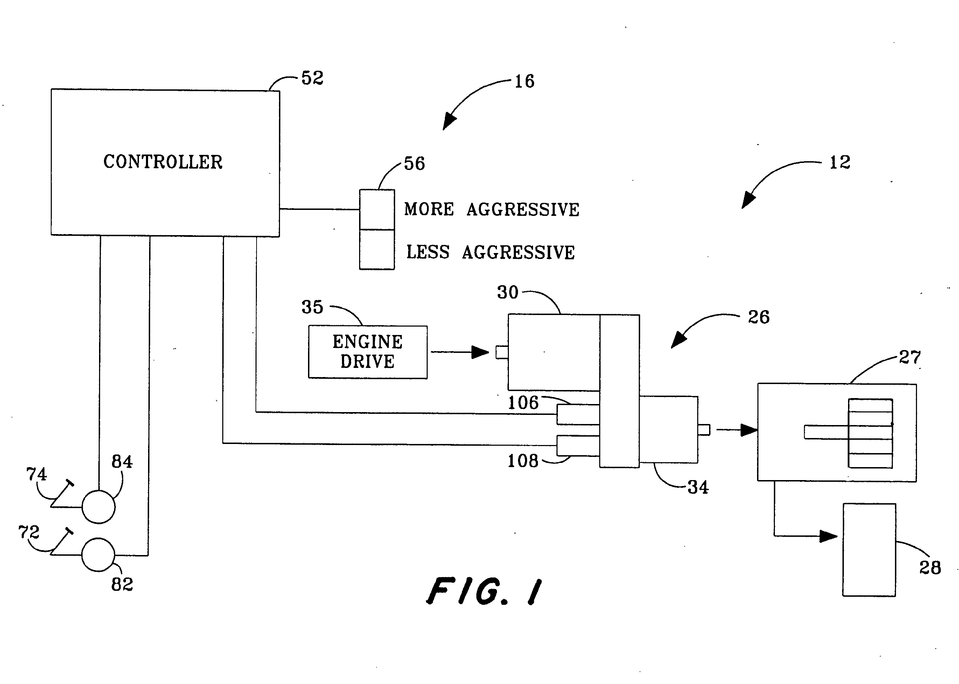

Figure 1 illustrates, in block diagram form, a vehicle 12 incorporating a first embodiment drive control system 16 of the present invention. The vehicle incorporates a hydrostatic transmission 26 and a range gear drive, such as a multi-speed gear transmission 27, for transmitting power through a differential (not shown) to one or more driven wheels 28.

The hydrostatic transmission 26 includes a variable displacement pump 30, and a hydraulic motor 34. An engine drive 35 rotationally drives the variable displacement pump 30. The hydraulic motor drives the multi-gear transmission drive 27 interposed between the hydraulic motor 34 and the driven wheel 28.

The control system 16 includes a controller 52, such as a microprocessor-based microcontroller, in signal-communication with an acceleration mode or "aggressiveness" set switch 56. The set switch 56 is selectively activated to trigger a more aggressive or a less-aggressive acceleration mode in the controller software, as described hereinafter.

The control system 16 includes a forward pedal 72 and a reverse pedal 74. The forward pedal 72 is operatively engaged with a potentiometer 82 to produce a forward pedal position signal, and a reverse pedal 74 is operatively engaged with a potentiometer 84 to produce a reverse pedal position signal. The potentiometers 82, 84 are signal-connected to the controller 52.

The controller 52 is signal-connected, through appropriate signal conditioning or amplifying circuitry (not shown), to a solenoid 106a of a forward drive proportional pressure control valve 106 and to a solenoid 108a of a reverse drive proportional pressure control valve 108. The output current to energize the forward or reverse pressure control valves 106, 108 is substantially proportional to the corresponding pedal position signal. An adjustable profile can be used to give the pedal a non-linear response to increase vehicle drivability.

The selectable ramps of the output current from the controller 52 control the rate of acceleration and deceleration of the vehicle. Two different programmed parameter sets in the controller software provide for a more aggressive operating mode and a less aggressive operating mode. The operator-activated set switch 56 is used to select between the two operating modes. The parameter sets can become effective by switching to the desired operating mode without returning the foot pedals 72, 74 to neutral.

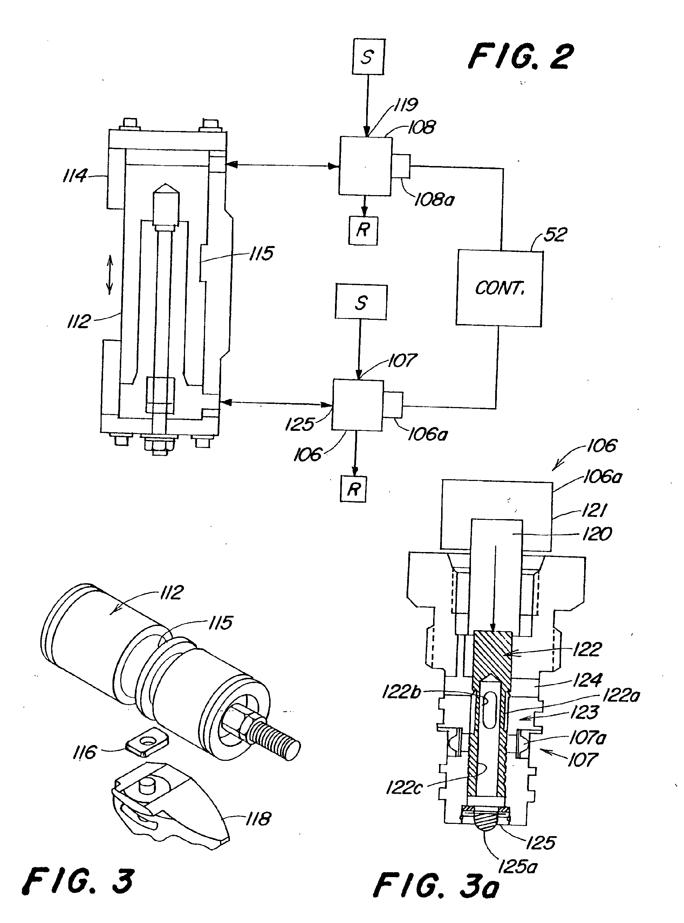

Figures 2 and 3 illustrate the hydrostatic transmission servo control in more detail. Given an engine drive speed and a range transmission or gear transmission gear selection, the hydrostatic transmission provides infinitely variable speed control, forward and reverse, by operation of the foot pedals 72, 74. Each valve 106, 108 is connected to a source of pressurized hydraulic fluid S and a return channel R at a reduced pressure. Preferably, the return channel R recirculates hydraulic fluid back to the vehicle's hydraulic system reservoir.

Depressing the forward foot pedal 72 causes an electrical output signal or voltage of the potentiometer 82 to be transmitted to the controller 52. The controller 52, through software, generates a pre-selected current ramp output, having a current vs. time profile selected by position of the set switch 56, to energize the solenoid driver 106a of the forward drive proportional valve 106. The proportional valve 106 is opened according to the ramp output, allowing pressurized hydraulic fluid, fed from the source S into the inlet 107 of the valve 106, to flow through the valve 106 to pressurize a servo cylinder 114 on one side of a servo piston 112 that is slidably housed in the cylinder 114. The other valve 108 allows fluid to flow from within the cylinder 114, from an opposite side of the servo piston 112, to the return channel R.

The piston 112 has a notch 115 that holds a piston follower 116 (Figure 3). The piston follower 116 controls movement of a variable displacement pump cam plate or swashplate 118. Movement of the piston 112 causes the cam plate118 in the hydraulic pump to rotate out of the neutral position. Maximum displacement of the pump 30 is attained when the servo piston 112 is moved to its extreme position. The swashplate 118 attains a range of forward positions selected by the foot pedal 72.

When the reverse pedal 74 is pressed, the potentiometer 84 sends an electrical output signal or voltage to the controller 52. The controller 52, through software, generates a pre-selected current output ramp, having a current vs. time profile selected by position of the set switch 56, to energize the solenoid 108a of the reverse drive proportional valve 108. The reverse drive proportional valve 108 is opened, according to the ramp output, to allow pressurized hydraulic fluid, fed into an inlet 119 of the valve 108 from the source S, to flow through the valve 108 to pressurize the servo cylinder 114 on an opposite side of the servo piston 112 within the cylinder 114. The other valve 106 allows fluid to flow from within the cylinder 114, from the one side of the servo piston 112, to the return channel R.

Preferably, the valve solenoids 106a, 108a are driven by pulse width modulation type currents and causes pressure to be modulated at the outlet proportionally, according to the controlled width of step pulses of current applied. While the frequency of the pulses remains substantially the same, the pulse widths are changed to modulate the valves.

When either the forward or reverse pedals 72, 74 are released, the controller 52 modulates the deceleration command according to a preselected current output ramps to the respective control valve solenoids 106a, 108a in a similar, but reversed, fashion as described for acceleration, based on the respective pedal position signal from the respective potentiometers 82, 84 and the selected current ramp profile from the set switch 56.

The hydrostatic system is preferably a closed loop fluid power system that consists of a charge pump (not shown), and the variable displacement pump 30, which is driven by a flex plate/dampener assembly (not shown) connected to the flywheel. The charge pump provides pressurized fluid to the proportional valve inlets 107,119. Return fluid from the servo control unit is routed to the reservoir of the vehicle's hydraulic system.

An exemplary example of a control valve, such as the control valve 106, is illustrated in Figure 3A. The solenoid 106a includes a plunger 120 (shown schematically) driven by the solenoid coil 121 (shown schematically). The plunger 120 drives a valve spool 122 within a housing 123. The housing provides the pressurized hydraulic fluid inlet 107, in the form of plural openings, and an outlet 124, in the form of plural openings, to the hydraulic fluid reservoir. A control pressure outlet 125 communicates hydraulic fluid at a modulated pressure to the servo cylinder 114 as shown in Figure 2. The solenoid coil 121 drives the plunger 120 downward (in Figure 3A) to open the inlet 107 to the outlet 125 through an annular channel 122a.

The channel 122a is open to an oblong orifice 122b through the spool 122 to communicate fluid into an interior 122c of the spool. The interior of the spool is open to the outlet 125. The pressure of the hydraulic fluid at the control outlet 125 is substantially proportional to the force applied to the spool by the plunger, ranging between reservoir pressure, the pressure at the outlet 125 with the inlet 107 closed, as shown in Figure 3A, to pressurized hydraulic fluid supply pressure, the spool 122 moved down to close the outlet 124 and open the inlet 107.

An annular screen 107a and a circular screen 125a can be supplied to the inlet 107 and to the outlet 125 respectively.

The control valve 108 can be identically configured as described above for the control valve 106.

### Hydrostatic Transmission

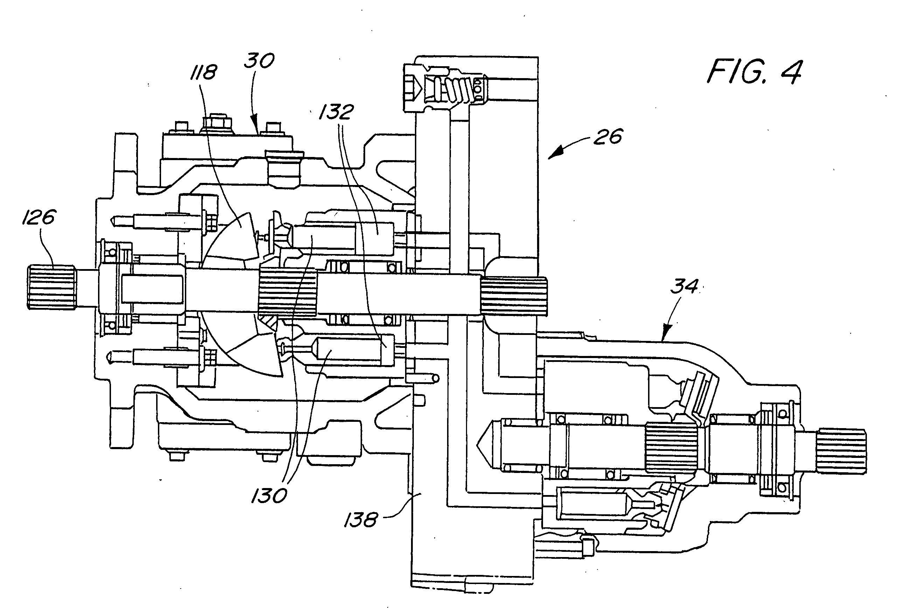

Figure 4 illustrates the hydrostatic transmission 26 in more detail. The hydrostatic pump 30 illustrated is an axial piston, servo controlled, variable displacement piston pump. Input shaft splines 126 are driven via a flex plate (not shown) bolted onto the engine flywheel (not shown).

Fluid flow through the pump 30 is controlled by changing the angle of the swashplate 118. The servo piston 112 controls this angle. Moving the respective directional pedal 72, 74 controls the valves 106, 108 via the controller software to provide a hydraulic assist to the double acting piston 112 which controls the position of the swashplate 118.

The location, off center, of the swashplate controls the distance the pistons 130 travel inside the piston bores 132 of the rotating assembly. The direction that the cam plate is rotated from center determines the direction of fluid flow (forward or reverse). The number of degrees the cam plate is deflected determines how much fluid will be displaced, i.e. determines the transmission speed.

The hydrostatic pump 30 provides hydraulic fluid to the hydrostatic motor 34 through the back plate 138. Hydraulic fluid in the power train circulates in a closed loop. Fluid leaves the hydrostatic pump 30, flows through the hydrostatic motor 34, and is returned to the hydrostatic pump. Fluid that leaves this closed loop circuit, such as to the case drain, is replenished by fluid from the charge pump.

The hydrostatic motor 34 is a high torque axial piston motor. The motor is located on the rear of the back plate. The hydrostatic motor drives an output shaft coupled to the range transmission 27 that transfers power to the wheels. The range transmission 27 can be a multi-speed range gear transmission, such as a three-speed or four-speed gearbox.

### Hydraulic Pressure Ramp Profiles

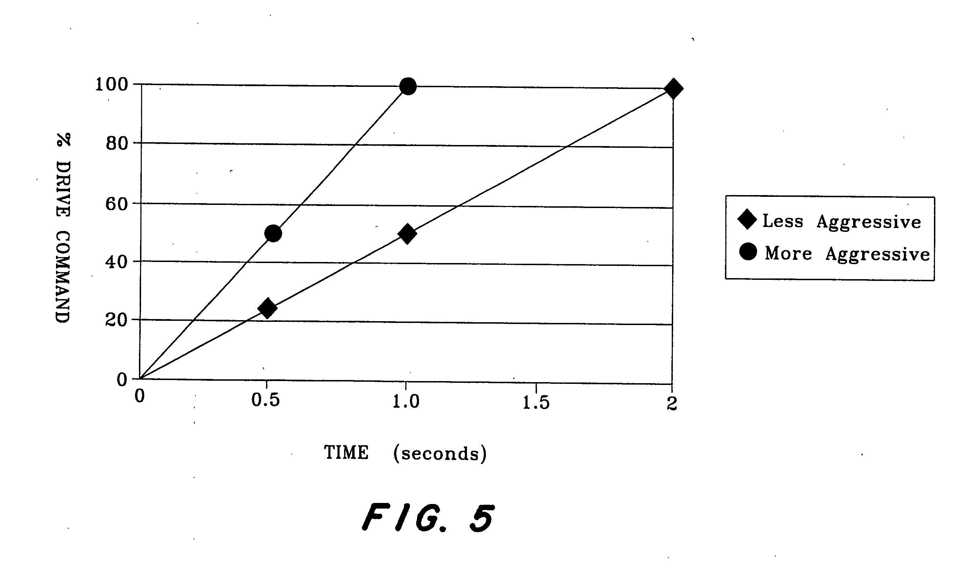

Figure 5 presents a comparison between a less aggressive power control and a more aggressive power control. As an example, for the more aggressive setting of the set switch 56, a 100 percent drive command corresponding to full pedal depression, either forward pedal 72 or reverse pedal 74, results in a proportional hydraulic pressure, controlled by the software of the controller 52 and the respective control valve 106,108, in the servo cylinder 114, of the hydrostatic transmission, within one second. For the less aggressive setting, 100 percent of the drive command results in a corresponding hydraulic pressure, controlled by the software of the controller 52 and the respective control valve 106,108, in the servo cylinder 114 of the hydrostatic transmission, within two seconds.

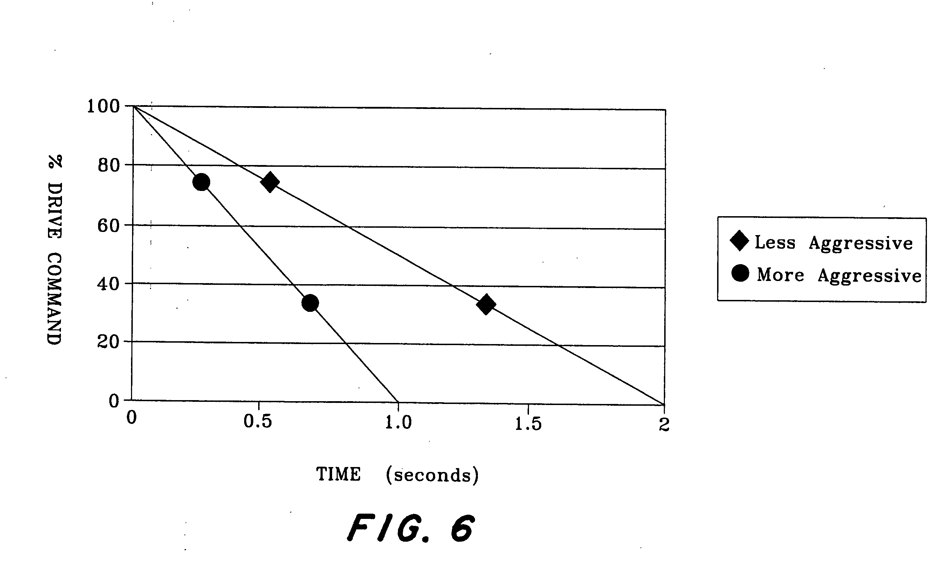

Figure 6 illustrates that for the hydrostatic transmission control described in Figure 1, the controller 52 and the respective control valve 106,108 also modulate decelerations for both forward and reverse operation. For a more aggressive modulation setting of the set switch 56, the software of the controller 52 and the respective control valve 106,108 cause a 100 percent deceleration command by the foot pedal position signal, to be realized in a corresponding hydraulic pressure reduction in the servo cylinder 114 of the hydrostatic transmission, within one second. For a less aggressive modulation setting of the set switch 56, the software of the controller 52, and the respective control valve 106,108, cause a 100 percent deceleration command by the foot pedal position signal to be realized in a corresponding hydraulic pressure reduction in the servo cylinder 114 of the hydrostatic transmission, within two seconds.

From the foregoing, it will be observed that numerous variations and modifications may be effected without departing from the spirit and scope of the invention. It is to be understood that no limitation with respect to the specific apparatus illustrated herein is intended or should be inferred. It is, of course, intended to cover by the appended claims all such modifications as fall within the scope of the claims.

## Claims

1. A vehicle control system (16) comprising: a control; an accelerator activated by a user to send an acceleration demand signal to said control; said control having an acceleration circuit receiving said acceleration demand signal and producing a selectable output signal proportional to said demand signal selectable between a first output signal and a second, greater output signal; an operator controlled selector for selecting between said first and second output signals; a transmission arranged for directing power to a wheel, said transmission responsive to said selectable output signal to accelerate said wheel (28).

2. The control system according to claim 1, **characterized in that** said control comprises a microcontroller (52).

3. The control system according to claim 1 or 2, **characterized in that** said transmission comprises a hydrostatic transmission (26) having a variable displacement pump (30) controlled by at least one proportional control valve (106, 108), said output signal controlling said proportional control valve (106, 108).

4. The control system according to one or several of the previous claims, **characterized in that** said acceleration demand signal comprises an electric signal proportional to accelerator travel.

5. The control system according to one or several of the previous claims, **characterized in that** said accelerator includes a potentiometer (82, 84) for providing said input signal, said input signal proportional to accelerator travel.

6. A vehicle control system (16) comprising: a controller (52) having a programmed acceleration circuitry; at least a forward acceleration pedal (72) having a position sensor, preferably a potentiometer (82, 84), that is signal-connected to an input of said programmed acceleration circuitry in the controller (52); at least one electrically controlled hydraulic proportional control valve (106, 108) that is signal-connected to said programmed acceleration circuitry of the controller (52); a transmission responsive to said hydraulic proportional control valve (106, 108) to drive a wheel (28); said programmed acceleration circuitry includes a first programmed electric current control circuit having as a first output signal a first rate of change of electric current over time in response to said input from said position sensor; said programmed acceleration circuitry includes a second electric current control circuitry having as a second output signal a second rate of change of electric current over time in response to said input from said position sensor; a selection device, preferably a switch (56), for operator selection between said first and second electric current control circuits; and said control valve proportionally responsive to a selected one of said first and second output signals.

7. The control system according to claim 6, wherein said transmission comprises a variable displacement pump (30) having a swashplate (118), the angular position of the swashplate (118) controlling variable displacement pump capacity, the pump (30) hydraulically connected to a hydraulic motor (34), and said proportional control valve (106, 108) controls swashplate (118) angular position.

8. A method of controlling the acceleration aggressiveness of a transmission, comprising the steps of: obtaining an input signal from an accelerator proportional to acceleration demand; selecting one out of at least a first and a second acceleration function, each producing an output signal proportional to the input signal, said first acceleration function producing, a first output signal and said second acceleration function producing a second, greater output signal; said output signal being signal-connected to a transmission hydraulic control valve (106, 108) to control acceleration of said transmission.

9. The method according to claim 8, **characterized in that** said step of selecting one acceleration function is further defined **in that** said one acceleration function is selected from an infinite number of acceleration functions selectable by a potentiometer (82, 84).

10. The method according to claim 8 or 9, **characterized in that** said step of selecting one acceleration function is further defined **in that** said acceleration function is selectable between said first and second acceleration functions alternatively by a switch (56).
